Europäisches Patentamt

European Patent Office

Office européen des brevets

(19)

(11) Veröffentlichungsnummer : **0 104 567 B1**

(12) **EUROPÄISCHE PATENTSCHRIFT**

(45) Veröffentlichungstag der Patentschrift : 16.06.87

(51) Int. Cl.⁴ : **F 16 K 31/383, F 15 B 13/042**

(21) Anmeldenummer : 83109232.5

(22) Anmeldetag : 17.09.83

(54) **Mit Eigenmedium gesteuertes Hydraulikventil mit einstellbarem Durchlassquerschnitt.**

(30) Priorität : 28.09.82 DE 3235778
17.12.82 DE 3246738

(43) Veröffentlichungstag der Anmeldung :
04.04.84 Patentblatt 84/14

(45) Bekanntmachung des Hinweises auf die Patenterteilung : 16.06.87 Patentblatt 87/25

(84) Benannte Vertragsstaaten :
**AT BE CH DE FR GB IT LI LU NL SE**

(56) Entgegenhaltungen :
**DE-A- 2 235 876
DE-A- 2 750 502
DE-A- 3 131 860
FR-A- 1 597 888
US-A- 3 907 248
"Cartridge-Ventile-einmal anders" aus "Ölhydraulik und Pneumatik" (4/79)**

(73) Patentinhaber : **Dr. H. Tiefenbach GmbH & Co.
Kupferdreher Strasse 266
D-4300 Essen 15 (DE)**

(72) Erfinder : **Lachmann, Helmut
Margrefstrasse 40
D-4300 Essen 16 (DE)**

(74) Vertreter : **Gesthuysen, Hans Dieter, Dipl.-Ing. et al
Patentanwälte Gesthuysen + von Rohr Huyssenallee
15 Postfach 10 13 33
D-4300 Essen 1 (DE)**

EP 0 104 567 B1

**Beschreibung**

Die Erfindung betrifft ein mit Eigenmedium gesteuertes Hydraulikventil mit einstellbarem Durchlaßquerschnitt, mit einem eine Druckmittelzuleitung und eine Druckmittelableitung aufweisenden Ventilgehäuse, einer in dem Ventilgehäuse zwischen der Druckmittelzuleitung und der Druckmittelableitung ausgebildeten Ventilkammer, einem in der Ventilkammer zur Einstellung des Durchlaßquerschnittes verschiebbar angeordneten Ventilkörper und einer Steuereinrichtung zur Steuerung des Ventilkörpers, wobei die Steuereinrichtung einen in einer zusätzlichen Ausnehmung des Ventilgehäuses verschiebbar geführten Steuerkolben und eine den Steuerkolben mit dem Ventilkörper verbindenden Kolbenstange sowie ein elektrisch ansteuerbares Steuerventil und Hilfssteuerventil aufweist, wobei die Ausnehmung durch den Steuerkolben in eine Gegendruckkammer und eine Steuerdruckkammer unterteilt ist und am Steuerkolben eine der Gegendruckkammer zugeordnete Gegenfläche und eine der Steuerdruckkammer zugeordnete Steuerfläche ausgebildet sind, wobei die Gegendruckkammer bzw. die Steuerdruckkammer über das Steuerventil mit der Druckmittelzuleitung und über das Hilfssteuerventil mit einem Druckmittelrücklauf verbindbar sind, wobei die Gegendruckkammer bzw. die Steuerdruckkammer über das Steuerventil und das Hilfssteuerventil absperrbar sind und wobei die Gegendruckkammer und die Steuerdruckkammer bei allen Stellungen des Steuerkolbens mit Druckmittel gefüllt sind.

Das bekannte mit Eigenmedium gesteuerte Hydraulikventil, von dem die Erfindung ausgeht (FR-A-1 597 888) ist ein insbesondere für die Ölhydraulik geeignetes, als Schieberventil ausgebildetes Hydraulikventil. Für die Wasserhydraulik mit dem dortigen Schmutz-, Ablagerungs- und Verschleißproblemen ist dieses Hydraulikventil weniger geeignet. Dies gilt in besonderem Maße für hohe Arbeitsdrücke, da die geringe Kompressibilität von Wasser zu hohen Druckstößen in der Hydraulikanlage führt. Verschleißprobleme treten besonders bei der Verschiebebewegung des als Ventilkörper dienenden Schubkolbens auf, der hier wegen der Konstruktion als Schieberventil Querströmungen ausgesetzt ist. Schließlich besteht bei den elektrisch angesteuerten Steuerventilen und Hilfssteuerventilen des bekannten Hydraulikventils das Problem, daß die Ansprechempfindlichkeit durch die auftretende Haftreibung begrenzt wird, — auch dies ist ein besonderes Problem bei der Wasserhydraulik, da die bei der Ölhydraulik zumeist vorhandenen dünnen, die Reibung mindernden Ölfilme fehlen.

Im übrigen ist ein besonders für die Wasserhydraulik geeignetes, als Sitzventil ausgeführtes Hydraulikventil bekannt (H. Lachmann « Cartridge-Ventile — einmal anders » in « o + p — ölhydraulik und pneumatik », Heft 4, 1979), das in Schließrichtung eigengesteuert und in Öffnungsrichtung fremdgesteuert ist. Auch dieses nur zum Teil mit Eigenmedium gesteuerte Hydraulikventil ist ein reines Auf/Zu-Ventil, bei dem die Einstellung des Durchlaßquerschnittes mittels einer mechanischen Einstellschraube erfolgen kann. Bei diesem Hydraulikventil ist zwar betriebsmäßig die Druckmittelzuleitung stets mit der Gegendruckkammer verbunden, so daß zeitweise ein Druckausgleich an dem Dichtungselement zwischen Gegendruckkammer und Steuerdruckkammer stattfindet, im Schließzustand aber ist auch hier die Steuerdruckkammer mit einem Lecköalanschluß verbunden, so daß die entsprechende Druckdifferenz am Dichtungselement sehr hoch ist.

Schließlich ist ein ausschließlich fremdgesteuertes, also über ein mit dem Eigenmedium nicht identisches Steuermedium gesteuertes Hydraulikventil bekannt (DE-A-2 750 502), das als Proportionalventil verwendbar ist, bei dem also der wirksame Durchlaßquerschnitt für das Druckmittel betriebsmäßig verändert, also « dynamisch » eingestellt werden kann. Der Ventilkörper bei diesem bekannten Hydraulikventil, das insbesondere für die Ölhydraulik bestimmt ist, ist vollständig druckentlastet, indem das in der Druckmittelzuleitung anstehende Druckmittel über eine Druckausgleichsleitung einer Gegendruckkammer zugeführt wird, wo es auf eine der Anströmfläche entsprechende Gegenfläche wirkt. Die jeweilige Stellung des Ventilkörpers ist hier durch einen entgegen der Federkraft eines Federelementes auf eine Steuerfläche wirkenden Steuerdruck bestimmt.

Der Erfindung liegt nun die Aufgabe zugrunde, das bekannte, eingangs erläuterte, mit Eigenmedium gesteuerte Hydraulikventil so auszugestalten und weiterzubilden, daß es in besonderer Weise für die Wasserhydraulik geeignet ist, insbesondere eine hohe Ansprechempfindlichkeit aufweist.

Das erfindungsgemäße mit Eigenmedium gesteuerte Hydraulikventil, bei dem die zuvor aufgezeigte Aufgabe gelöst ist, ist dadurch gekennzeichnet, daß in der Ventilkammer ein Ventilsitz ausgebildet ist, daß der Ventilkörper gegenüber dem Ventilsitz verschiebbar ist und eine Anströmfläche für das Druckmittel aufweist, daß die Gegenfläche größer als die Anströmfläche und die Steuerfläche kleiner bzw. größer als die Differenz von Gegenfläche und Anströmfläche sind und daß als Ansteuerspannung für das Steuerventil und das Hilfssteuerventil eine Folge von Gleichspannungsimpulsen oder eine pulsierende Gleichspannung, vorzugsweise eine mit einer Folge von Gleichspannungsimpulsen oder mit einer Wechselspannung modulierte Gleichspannung od. dgl., verwendet wird. Erfindungsgemäß ist das mit Eigenmedium gesteuerte Hydraulikventil zunächst also als Sitzventil, nicht mehr als Schieberventil, ausgeführt. Das ist eine für die Wasserhydraulik besonders geeignete Konstruktion, da die Anströmung des Ventilkörpers stirnseitig, an der Anströmfläche, und nicht quer erfolgt. Die in bestimmter Weise unterschiedliche Größe von Anströmfläche, Gegenfläche und Steuerfläche hat bei diesem als Sitzventil ausgeführten Hydraulikventil bei einmal eingestelltem Durchlaßquerschnitt keine Bedeutung, sondern ist nur bei Änderungen des Durchlaßquerschnitts, also bei einer « dynamischen » Einstellung des Durchlaßquerschnitts, bedeutsam. Dabei kann durch die unterschiedliche Ansteuerung der Gegendruckkammer und der Steuerdruckkammer ein bei Ausfall von Steuerventil und Hilfssteuerventil, ggf. durch Stromausfall, öffnendes oder für diesen Fall von selbst schließendes Hydraulikventil verwirklicht werden.

Die Einstellbarkeit des Durchlaßquerschnittes ist bei dem erfindungsgemäßen Hydraulikventil aber auch besonders feinfühlig möglich, eine hohe Ansprechempfindlichkeit ist in für Wasserhydraulik geeigneter Weise gegeben, da bei dem Steuerventil und dem Hilfssteuerventil durch die erfindungsgemäße elektrische Ansteuerung ein Auftreten von Haftreibung systematisch verhindert wird. Durch die erfindungsgemäß verwirklichte elektrische Ansteuerung wird vielmehr stets Gleitreibung realisiert, indem nämlich die Ventilkörper des Steuerventils und des Hilfssteuerventils auch in jeder Endposition stets eine oszillierende Bewegung mit geringer Amplitude ausführen. Dadurch wird das bei der Wasserhydraulik im Gegensatz zur Ölhydraulik besonders wesentliche Problem der Haftreibung und damit der Ansprechempfindlichkeit eliminiert.

Die Fähigkeit des erfindungsgemäßen Hydraulikventils, den wirksamen Durchlaßquerschnitt wirklich optimal « dynamisch » einzustellen, wird dadurch noch gesteigert, daß das Steuerventil und das Hilfssteuerventil als Drosselventile mit einstellbarem Durchlaßquerschnitt ausgebildet sind. Dadurch läßt sich die Steuergeschwindigkeit für das erfindungsgemäße Hydraulikventil in weiten Grenzen vorgeben.

Schließlich geht eine weitere Lehre der Erfindung noch dahin, das erfindungsgemäße Hydraulikventil so auszugestalten, daß mehrere Ventilkammern und mehrere Ventilkörper vorgesehen und in Durchflußrichtung des Druckmittels hintereinandergeschaltet sind und daß alle Ventilkörper gemeinsam und gleichzeitig von der Steuereinrichtung her bewegbar und damit die Durchlaßquerschnitte gleichzeitig einstellbar sind. Vorzugsweise werden dabei die über die Ventilkörper eingestellten Durchlaßquerschnitte in Durchflußrichtung des Druckmittels geringer. Praktisch wird also statt einer durch den Ventilkörper gebildeten Drosselstelle eine Kaskade hintereinander geschalteter Drosselstellen verwirklicht, so daß an jeder der Drosselstellen nur ein Teil der gesamten Druckdifferenz auftritt.

Im folgenden wird die Erfindung anhand einer lediglich Ausführungsbeispiele darstellenden Zeichnung näher erläutert ; es zeigt

Figur 1 in schematischer Darstellung ein erstes Ausführungsbeispiel eines Hydraulikventils,

Figur 2 in schematischer Darstellung ein zweites Ausführungsbeispiel eines Hydraulikventils,

Figur 3 in genauerer Darstellung, teilweise im Schnitt, ein drittes Ausführungsbeispiel eines Hydraulikventils, allerdings ohne genaue Darstellung des Steuerventils und des Hilfssteuerventils, und

Figur 4 wiederum in genauerer Darstellung, teilweise im Schnitt, ein viertes Ausführungsbeispiel eines Hydraulikventils, wiederum ohne genaue Darstellung des Steuerventils und des Hilfssteuerventils.

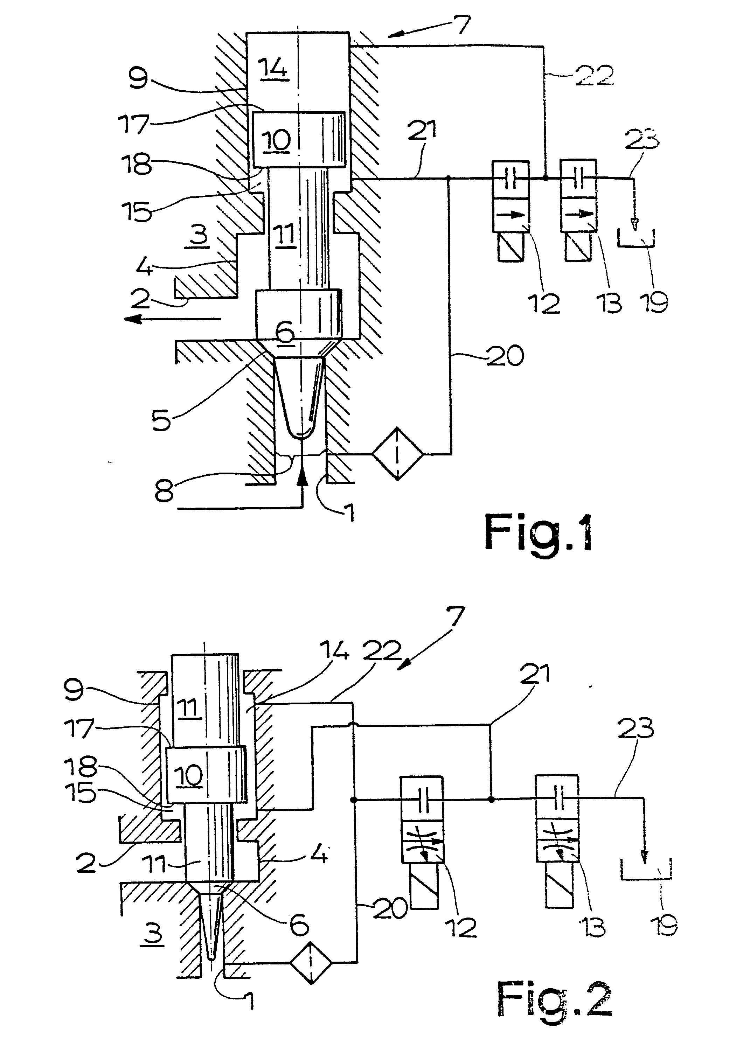

Zunächst soll anhand der Fig. 1 und 2 der grundsätzliche Aufbau eines Hydraulikventils ohne Rücksicht auf besondere Ausführungsformen erläutert werden.

In den Fig. 1 und 2 ist ein mit Eigenmedium, beispielsweise mit Druckwasser, gesteuertes Hydraulikventil mit einstellbarem Durchlaßquerschnitt gezeigt. Dieses Hydraulikventil weist ein eine Druckmittelzuleitung 1 und eine Druckmittelableitung 2 aufweisendes Ventilgehäuse 3, eine in dem Ventilgehäuse 3 zwischen der Druckmittelzuleitung 1 und der Druckmittelableitung 2 ausgebildete Ventilkammer 4, einen in der Ventilkammer 4 ausgebildeten Ventilsitz 5, einen in der Ventilkammer 4 zur Einstellung des Durchlaßquerschnittes gegenüber dem Ventilsitz 5 verschiebbar angeordneten Ventilkörper 6 und eine Steuereinrichtung 7 zur Steuerung des Ventilkörpers 6 auf.

Der Ventilkörper 6 weist eine Anströmfläche 8 für das Druckmittel auf, das in der Druckmittelzuleitung 1 ansteht. (Da das in den Fig. 1 und 2 dargestellte Hydraulikventil insbesondere für die Wasserhydraulik bestimmt ist, wird der Ventilkörper 6 von unten angeströmt). Außerdem weist der Ventilkörper 6 eine langgestreckte Drosselspitze auf, die Schmutzteilchen im Druckwasser ablenkt und eine Beschädigung des Ventilsitzes 5 verhindert.

Die Steuereinrichtung 7 zur Steuerung des Ventilkörpers 6 weist zunächst einen in einer zusätzlichen Ausnehmung 9 des Ventilgehäuses 3 verschiebbar geführten Steuerkolben 10 und eine den Steuerkolben 10 mit dem Ventilkörper 6 verbindende Kolbenstange 11 auf. Außerdem weist die Steuereinrichtung 7 ein Steuerventil 12 sowie ein Hilfssteuerventil 13 auf. Die Ausnehmung 9 im Ventilgehäuse 3 ist durch den Steuerkolben 10 in eine Gegendruckkammer 14 und eine Steuerdruckkammer 15 unterteilt. Die Ventilkammer 4 einerseits sowie die Gegendruckkammer 14 andererseits und schließlich die Steuerdruckkammer 15 sind gegeneinander durch verschiedene Dichtungselemente 16 abgedichtet. Am Steuerkolben 10 ist eine der Gegendruckkammer 14 zugeordnete Gegenfläche 17 sowie eine der Steuerdruckkammer 15 zugeordnete Steuerfläche 18 ausgebildet.

Wie im einzelnen später noch erläutert wird, sind die Gegendruckkammer 14 bzw. die Steuerdruckkammer 15 über das Steuerventil 12 mit der Druckmittelzuleitung 1 und über das Hilfssteuerventil 13 mit einem Druckmittelrücklauf 19 verbindbar. Dazu sind verschiedene Druckleitungen 20, 21, 22 und 23 vorgesehen.

Schließlich ist die Gegenfläche 17 am Steuerkolben 10 größer als die Anströmfläche 8 am Ventilkörper 6. Die Steuerfläche 18 am Steuerkolben 10 ist bei dem in Fig. 1 dargestellten Ausführungsbeispiel kleiner und bei dem in Fig. 2 dargestellten Ausführungsbeispiel größer als die Differenz von Gegenfläche 17 und Anströmfläche 8.

Von Bedeutung ist, daß die Gegendruckkammer 14 und die Steuerdruckkammer 15 bei allen Stellungen des Steuerkolbens 10 mit Druckmittel gefüllt sind. Dabei ist bei dem in Fig. 1 dargestellten Ausführungsbeispiel die Gegendruckkammer 14 über das Steuerventil 12 und das Hilfssteuerventil 13 absperrbar, während bei dem in Fig. 2 dargestellten Ausführungsbeispiel die Steuerdruckkammer 15 über die Ventile 12 und 13 absperrbar ist. Grundsätzlich könnten natürlich auch beide Kammern über jeweils ein Steuerventil absperrbar sein ; das ist jedoch hier nicht dargestellt.

In den beiden in den Fig. 1 und 2 dargestellten Ausführungsbeispielen eines Hydraulikventils ist das Steuerventil 12 im Ergebnis zwischen der Gegendruckkammer 14 und der Steuerdruckkammer 15 angeordnet. Dabei ist bei dem in Fig. 1 dargestellten Ausführungsbeispiel die Steuerdruckkammer 15 ohne Zwischenschaltung eines Ventils direkt mit der Druckmittelzuleitung 1 verbunden, während dies bei dem in Fig. 2 dargestellten Ausführungsbeispiel für die Gegendruckkammer 14 gilt.

Das Steuerventil 12 ist im übrigen an seiner von der Druckmittelzuleitung 1, mit der es ja in jedem Fall verbunden ist, abgewandten Seite mit dem Hilfssteuerventil 13 verbunden.

Fig. 2 zeigt insoweit ein besonders bevorzugtes Ausführungsbeispiel eines Hydraulikventils, als das Steuerventil 12 und das Hilfssteuerventil 13 als Drosselventile mit einstellbarem Durchlaßquerschnitt ausgebildet sind. Im übrigen sind das Steuerventil 12 und das Hilfssteuerventil 13 in beiden dargestellten Fällen elektrisch ansteuerbar.

Die elektrische Ansteuerbarkeit des Steuerventils 12 und des Hilfssteuerventils 13 erlaubt die Verwendung einer modulierten Gleichspannung als Ansteuerspannung, so daß wegen der dauernden oszillierenden Bewegungen des jeweiligen Ventilkörpers mit geringer Amplitude praktisch nur Gleitreibung und niemals Haftreibung auftritt.

Die Funktionsweise des Hydraulikventils soll anhand des Ausführungsbeispiels in Fig. 1 erläutert werden :

Das in Fig. 1 dargestellte Hydraulikventil befindet sich in Schließposition. Da das Steuerventil 12 und das Hilfssteuerventil 13 geschlossen sind, kann wegen der Inkompressibilität des in der Gegendruckkammer 14 befindlichen Druckmittels der Ventilkörper 6 mit dem Steuerkolben 10 trotz des in der Druckmittelzuleitung 1 und in der Steuerdruckkammer 15 anstehenden Druckes nicht bewegt werden. Um das Hydraulikventil zu öffnen, muß vielmehr das Hilfssteuerventil 13 betätigt werden, so daß eine bestimmte Menge Druckmittels aus der Gegendruckkammer 14 zum Druckmittelrücklauf 19 fließen kann. Eine dieser abfließenden Menge Druckmittels entsprechende Menge des Druckmittels fließt gleichzeitig von der Druckmittelzuleitung 1 über die Druckleitung 20 und die Druckleitung 21 in die Steuerdruckkammer 15 nach. Sowie das Hilfssteuerventil 13 wieder schließt, bleibt der Steuerkolben 10 und damit auch der Ventilkörper 6 stehen ; das gesamte Hydraulikventil ist mit einem genau definierten Durchlaßquerschnitt geöffnet.

Soll das geöffnete Hydraulikventil später wieder geschlossen werden oder ist eine Verringerung des Durchlaßquerschnittes notwendig, so wird das Steuerventil 12 kurzzeitig geöffnet. Während der Öffnungszeit des Steuerventils 12 fließt Druckmittel von der Druckmittelzuleitung 1 über die Druckleitung 20 und die Druckleitung 22 zur Gegendruckkammer 4. Da die Gegenfläche 17 im hier dargestellten Ausführungsbeispiel größer ist als die Summe von Anströmfläche 8 und Steuerfläche 18, wird bei gleichem Druck an allen diesen Flächen der Steuerkolben 10 und mit ihm der Ventilkörper 6 in Schließrichtung bewegt. Diese Bewegung wird abrupt gestoppt, sowie das Steuerventil 12 wieder geschlossen wird.

Das in Fig. 2 dargestellte Ausführungsbeispiel eines Hydraulikventils unterscheidet sich von dem soeben erläuterten Ausführungsbeispiel eines Hydraulikventils in funktioneller Hinsicht nur dadurch, daß es bei geschlossenem Steuerventil 12 und geöffnetem Hilfssteuerventil 13 in Schließrichtung bewegt wird. Soll dieses in Fig. 2 in Schließposition dargestellte Hydraulikventil geöffnet werden, so wird, bei geschlossenem Hilfssteuerventil 13, das Steuerventil 12 für eine bestimmte Zeit geöffnet. Über die Druckleitung 20 und die Druckleitung 21 kann nun Druckmittel von der Druckmittelzuleitung 1 in die Steuerdruckkammer 15 strömen. Da die Steuerfläche 18 in diesem Ausführungsbeispiel größer als die Differenz von Gegenfläche 17 und Anströmfläche 8 ist, wird der Steuerkolben 10 mit dem Ventilkörper 6 in Öffnungsrichtung bewegt. Dabei wird dann Druckmittel aus der Gegendruckkammer 14 über die Druckleitung 22 ausgeschoben. Dieses Druckmittel kann ebenfalls über das Steuerventil 12 und die Druckleitung 21 in die Steuerkammer 15 einströmen. Schließt das Steuerventil 12, so ist auch hier unmittelbar ein fester Durchlaßquerschnitt eingestellt.

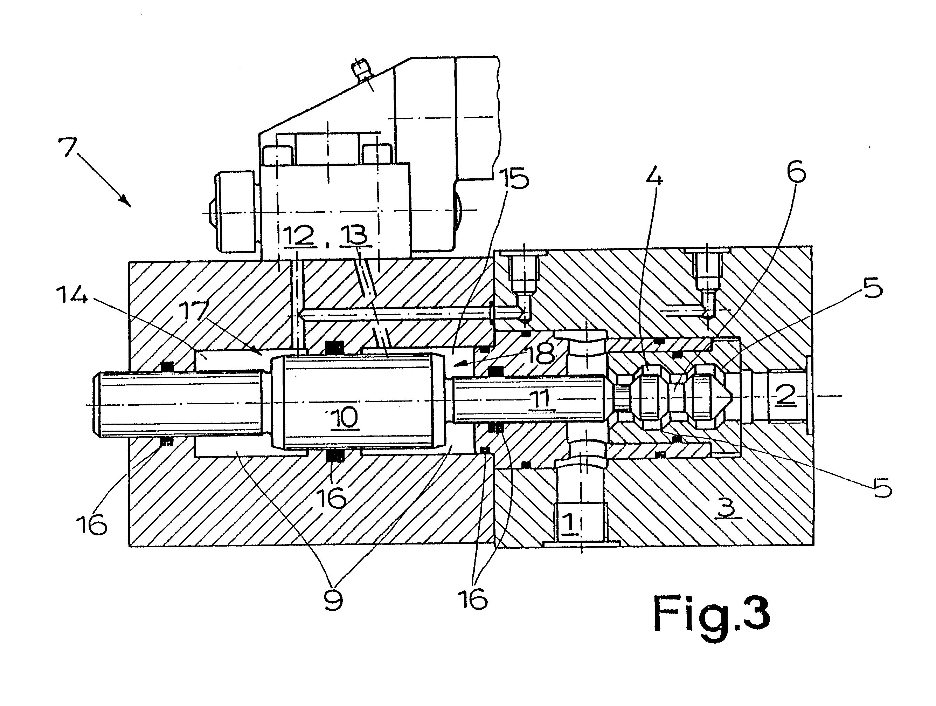

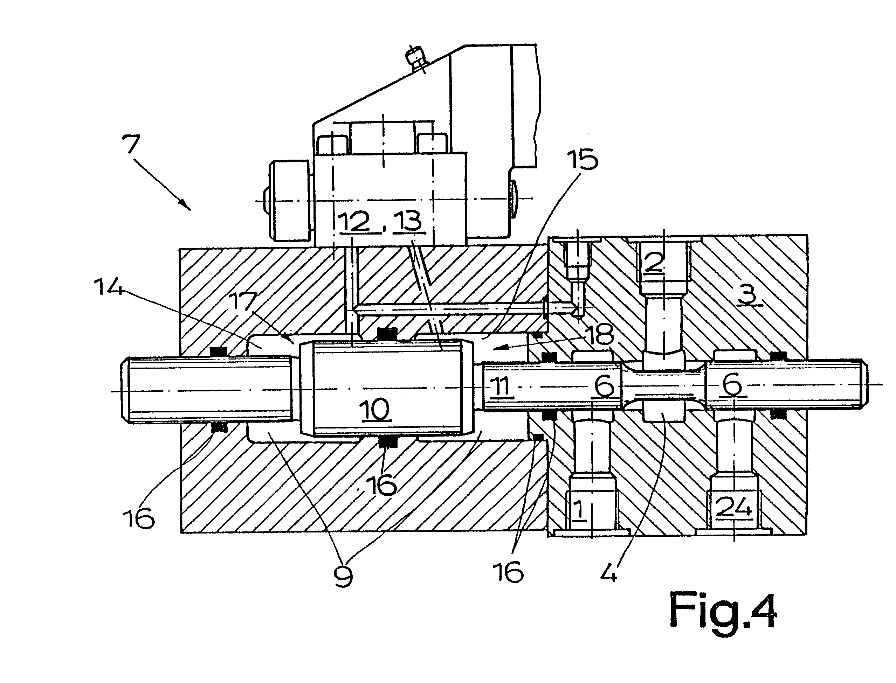

In den Fig. 3 und 4 ist der genaue Aufbau von Hydraulikventilen dargestellt, allerdings ohne die genaue Konstruktion des Steuerventils 12 und des Hilfssteuerventils 13 und deren Verbindung mit der Gegendruckkammer 14 und der Steuerdruckkammer 15 des Hydraulikventils zu zeigen.

Bei dem in Fig. 3 dargestellten Ausführungsbeispiel eines Hydraulikventils sind — funktionell — mehrere Ventilkammern 4 und mehrere Ventilkörper 6 vorgesehen und in Durchflußrichtung des Druckmittels hintereinandergeschaltet.

Dabei sind alle Ventilkörper 6 gemeinsam und gleichzeitig von der Steuereinrichtung 7 her bewegbar, so daß die Durchlaßquerschnitte gleichzeitig einstellbar sind. Praktisch ist also statt einer durch einen Ventilkörper 6 gebildeten Drosselstelle eine Kaskade hintereinander geschalteter Drosselstellen verwirklicht, so daß an jeder der Drosselstellen nur ein Teil der gesamten Druckdifferenz auftritt.

Das in Fig. 4 dargestellte Ausführungsbeispiel eines Hydraulikventils weist noch die Besonderheit auf, daß neben der Druckmittelzuleitung 1 und der Druckmittelableitung 2 im Ventilgehäuse 3 eine Druckmittelrückleitung 24 verwirklicht ist.

### Patentansprüche

1. Mit Eigenmedium gesteuertes Hydraulikventil mit einstellbarem Durchlaßquerschnitt, mit einem eine Druckmittelzuleitung (1) und eine Druckmittelableitung (2) aufweisenden Ventilgehäuse (3), einer in dem Ventilgehäuse (3) zwischen der Druckmittelzuleitung (1) und der Druckmittelableitung (2) ausgebildeten Ventilkammer (4), einem in der Ventilkammer (4) zur Einstellung des Durchlaßquerschnittes verschiebbar angeordneten Ventilkörper (6) und einer Steuereinrichtung (7) zur Steuerung des Ventilkörpers (6), wobei die Steuereinrichtung (7) einen in einer zusätzlichen Ausnehmung (9) des Ventilgehäuses (3) verschiebbar geführten Steuerkolben (10) und eine den Steuerkolben (10) mit dem Ventilkörper (6) verbindenden Kolbenstange (11) sowie ein elektrisch ansteuerbares Steuerventil (12) und Hilfssteuerventil (13) aufweist, wobei die Ausnehmung (9) durch den Steuerkolben (10) in eine Gegendruckkammer (14) und eine Steuerdruckkammer (15) unterteilt ist und am Steuerkolben (10) eine der Gegendruckkammer (14) zugeordnete Gegenfläche (17) und eine der Steuerdruckkammer (15) zugeordnete Steuerfläche (18) ausgebildet sind, wobei die Gegendruckkammer (14) bzw. die Steuerdruckkammer (15) über das Steuerventil (12) mit der Druckmittelzuleitung (1) und über das Hilfssteuerventil (13) mit einem Druckmittelrücklauf (19) verbindbar sind, wobei die Gegendruckkammer (14) bzw. die Steuerdruckkammer (15) über das Steuerventil (12) und das Hilfssteuerventil (13) absperrbar sind und wobei die Gegendruckkammer (14) und die Steuerdruckkammer (15) bei allen Stellungen des Steuerkolbens (10) mit Druckmittel gefüllt sind, dadurch gekennzeichnet, daß in der Ventilkammer (4) ein Ventilsitz (5) ausgebildet ist, daß der Ventilkörper (6) gegenüber dem Ventilsitz (5) verschiebbar ist und eine Anströmfläche (8) für das Druckmittel aufweist, daß die Gegenfläche (17) größer als die Anströmfläche (8) und die Steuerfläche (18) kleiner bzw. größer als die Differenz von Gegenfläche (17) und Anströmfläche (8) sind und daß als Ansteuerspannung für das Steuerventil (12) und das Hilfssteuerventil (13) eine Folge Von Gleichspannungsimpulsen oder eine pulsierende Gleichspannung, vorzugsweise eine mit einer Folge von Gleichspannungsimpulsen oder mit einer Wechselspannung modulierte Gleichspannung od. dgl., verwendet wird.

2. Hydraulikventil nach Anspruch 1, dadurch gekennzeichnet, daß das Steuerventil (12) und das Hilfssteuerventil (13) als Drosselventile mit einstellbarem Durchlaßquerschnitt ausgebildet sind.

3. Hydraulikventil nach Anspruch 1 oder 2, dadurch gekennzeichnet, daß mehrere Ventilkammern (4) und mehrere Ventilkörper (6) vorgesehen und in Durchflußrichtung des Druckmittels hintereinandergeschaltet sind und daß alle Ventilkörper (6) gemeinsam und gleichzeitig von der Steuereinrichtung (7) her bewegbar und damit die Durchlaßquerschnitte gleichzeitig einstellbar sind.

4. Hydraulikventil nach Anspruch 3, dadurch gekennzeichnet, daß die über die Ventilkörper (6) eingestellten Durchlaßquerschnitte in Durchflußrichtung des Druckmittels geringer werden.

### Claims

1. A hydraulic valve, controlled by its own medium, with an adjustable passage cross-section, with a valve housing (3) having a pressure medium inlet pipe (1) and a pressure medium outlet pipe (2), with a valve chamber (4) formed in the valve housing (3) between the pressure medium inlet pipe (1) and the pressure medium outlet pipe (2), a valve member (6) slidably arranged in the valve chamber (4) for adjustment of the passage cross-section, and a control means (7) to control the valve member (6), in which the control appliance (7) has a control piston (10) slidably guided in an additional recess (9) of the valve housing (3) and a piston rod (11) the connecting control piston (10) to the valve member (6), as well as an electrically controllable control valve (12) and auxiliary control valve (13) ; in which the recess (9) is divided by the control piston (10) into a reverse-pressure chamber (14) and a control-pressure chamber (15), and a reverse surface (17) associated with the reverse-pressure chamber (14) and a control surface (18) associated with the control-pressure chamber (15) are formed on the control piston (10) ; in which the reverse-pressure chamber (14), or alternatively the control-pressure chamber (15), is connectable via the control valve (12) with the pressure medium inlet pipe (1) and via the auxiliary control valve (13) with a pressure medium return (19) ; in which reverse-pressure chamber (14), or alternatively the control-pressure chamber (15) is capable of being shut off by the control valve (12) and the auxiliary control valve (13) ; and in which the reverse-pressure chamber (14) and the control-pressure chamber (15) are filled with pressure medium in all positions of the control piston (10), characterized in that a valve seat (5) is formed in the valve chamber (4), that valve member (6) is capable of being pushed against valve seat (5) and has an incident-flow surface (8) for the pressure medium ; that reverse surface (17) is larger than incident-flow surface (8) and that control surface (18) is smaller, or alternatively larger, than the difference between the areas of reverse surface (17) and incident-flow surface (8) ; and that a succession of D. C. voltage impulses or a pulsating D. C. voltage, preferably a D. C. voltage modulated by a succession of D. C. voltage impulses or by a A. C. voltage, is used as control voltage for the control valve (12) and the auxiliary control valve (13).

2. A hydraulic valve according to Claim 1, characterized in that the control valve (12) and the auxiliary control valve (13) are constructed as throttle valves with adjustable passage cross-section.

3. A hydraulic valve according to Claim 1 or 2, characterized in that several valve chambers (4) and valve members (6) are provided and connected in series with one another in the direction of flow of the pressure medium, and that all the valve members (6) are moveable together and simultaneously by the control means (7) and thereby the passage cross-sections can be adjusted simultaneously.

4. A hydraulic valve according to Claim 3, characterized in that the passage cross-sections adjusted by the valve members (6) become smaller in the direction of flow of the pressure medium.

## Revendications

1. Vanne hydraulique commandée par son propre fluide, avec section de passage réglable, avec un corps de vanne (3) présentant une conduite d'adduction de fluide sous pression (1) et une conduite d'évacuation de fluide sous pression (2), une chambre de vanne (4), constituée dans le corps de vanne (3) entre la conduite d'alimentation de fluide sous pression (1) et la conduite d'évacuation de fluide sous pression (2), un corps de vanne (6), disposé de manière mobile dans la chambre de vanne (4) pour régler la section de passage et un dispositif de commande (7) pour commander le corps de vanne (6), tandis que le dispositif de commande (7) présente dans une cavité supplémentaire (9) du corps de vanne (3) un piston de commande (10) pouvant se déplacer avec guidage et une tige de piston (11) reliant le piston de commande (10) au corps de vanne (6), ainsi qu'une vanne de commande (12) à commande électrique et une vanne de commande auxiliaire (13), tandis que la cavité (9) est subdivisée par le piston de commande (10) en une chambre de contre-pression (14) et une chambre de pression de commande (15) et que le piston de commande (10) présente une surface opposée (17) correspondant à la chambre de contre-pression (14) et une surface de commande (18) correspondant à la chambre de pression de commande (15), tandis que la chambre de contre-pression (14) et la chambre de pression de commande (15) peuvent être reliées par la vanne de commande (12) à la conduite d'alimentation de fluide sous pression (1) et par la vanne de commande auxiliaire (13) à une conduite de retour de fluide sous pression (19), tandis que la chambre de contre-pression (14) et la chambre de pression de commande (15) peuvent être isolées par la vanne de commande (12) et la vanne de commande auxiliaire (13) et ou la chambre de contre-pression (14) et la chambre de pression de commande (15) sont remplies de fluide sous pression pour toutes les positions du piston de commande (10), caractérisée en ce qu'un siège de vanne (5) est constitué dans la chambre de vanne (4), en ce que le corps de vanne (6) peut se déplacer par rapport au siège de vanne (5) et présente une surface (8) venant au contact du fluide sous pression, en ce que la surface opposée (17) est plus grande que la surface de contact (8), et que la surface de commande (18) est plus grande ou plus petite que la différence entre la surface opposée (17) et la surface de contact (8), et en ce que la tension de commande utilisée pour la vanne de commande (12) et la vanne de commande auxiliaire (13) est constituée d'une succession d'impulsions de tension continue ou d'une tension continue pulsatoire et, de préférence, d'une succession d'impulsions de tension continue ou d'une tension continue modulée par une tension alternative.

2. Vanne hydraulique selon la revendication 1, caractérisée en ce que la vanne de commande (12) et la vanne de commande auxiliaire (13) sont disposées sous forme de vannes de réglage avec section de passage réglable.

3. Vanne hydraulique selon la revendication 1 ou 2, caractérisée en ce que plusieurs chambres de vanne (4) et plusieurs corps de vanne (6) sont prévus et sont montés les uns derrière les autres dans la direction de passage du fluide sous pression, et en ce que tous les corps de vanne (6) peuvent se déplacer en commun et simultanément sous l'effet du dispositif de commande (7) et que les sections de passage peuvent donc être réglées simultanément.

4. Vanne hydraulique selon la revendication 3, caractérisée en ce que les sections de passage reglées par les corps de vanne (6) diminuent dans la direction d'écoulement du fluide sous pression.

Fig.1

Fig.2

Fig.3

2

Fig.4